# EUROPÄISCHE PATENTSCHRIFT

(11) **EP 0 344 461 B1**
(45) Veröffentlichungstag und Bekanntmachung des Hinweises auf die Patenterteilung: **12.10.1994**
(21) Anmeldenummer: 89107509.5
(22) Anmeldetag: 26.04.1989
(51) Int. Cl.: G01N 21/61

(54) **Kalibriereinrichtung für ein nichtdispersives Infrarot-Fotometer**
Device for calibrating a non-dispersive infrared photometer
Dispositif d'étalonnage pour un photomètre non dispersif à l'infrarouge

(30) Priorität: 01.06.1988 DE 3818598
(43) Veröffentlichungstag der Anmeldung: 06.12.1989
(73) Patentinhaber: Hartmann & Braun Aktiengesellschaft, 60484 Frankfurt am Main (DE)
(72) Erfinder: Fabinski, Walter, D-6239 Kriftel (DE); Taubitz, Georg, Dr., D-6370 Oberursel (DE); Hose von Wolfframsdorff, Joachim, D-6104 Seeheim-Jugenheim (DE)
(74) Vertreter: Meissner, Peter E., Dipl.-Ing.

(56) Entgegenhaltungen:
- DE-A- 3 522 949
- DE-B- 1 698 218
- US-A- 2 970 513

## Beschreibung

Die Erfindung bezieht sich auf eine Kalibriereinrichtung für ein nichtdispersives Infrarot-Fotometer (NDIR-Fotometer) nach dem Oberbegriff des Anspruches 1.

NDIR-Fotometer bestehen aus einem Strahler, einer Absorptionsstrecke und einem Empfänger. Hinzu kommen besondere Selektivierungseinrichtungen. Als Strahlenquelle dienen bei diesen Fotometern im allgemeinen thermische Strahler. Als Empfänger werden gasgefüllte Einrichtungen oder Festkörperdetektoren eingesetzt. Die Absorptionsstrecke ist bei extrativ arbeitenden Fotometern mit dem angesprochenen Meßprinzip meist als Doppelküvette mit einer Meßkammer und einer Referenz- oder Vergleichskammer ausgebildet.

NDIR-Fotometer der genannten Art unterliegen zeitlichen Veränderungen durch Alterungseffekte und Drifterscheinungen und müssen von Zeit zu Zeit nachkalibriert werden. Diese Nachkalibrierung wird nach dem Stand der Technik durch Bestromen der Meßküvette mit Prüfgasen durchgeführt. Da die Prüfgase im allgemeinen in schweren Metallflaschen aufbewahrt werden, ist die Kalibrierung aufwendig, teuer und umständlich. Dies gilt vor allem für die mobile Messung.

Aus der DE-OS 35 22 949 ist es bekannt, eine Kalibrierküvette zu verwenden, in die ein Prüfgas fest eingeschlossen ist und die in vorgebbaren Abständen in den Strahlengang des Fotometers eingeschoben oder eingeschwenkt wird.

Derartige Einrichtungen haben sich bis heute auf breiter Basis bei NDIR-Fotometern nicht durchgesetzt. Der Grund liegt darin, daß diese Fotometer thermische Meßprinzipien benutzen und damit sehr sensibel gegen thermische und optische Veränderungen sind. Dies gilt in besonderer Weise für Zweistrahlfotometer, die einen Meß- und einen Vergleichsstrahlengang besitzen und die ein Differenzsignal zwischen dem Meß- und dem Vergleichsstrahl erzeugen.

Ein Einbringen bisheriger Kalibriereinrichtungen in den Strahlengang stört das Gleichgewicht des Fotometers durch unterschiedliche optische und thermische Beeinflussung von Meß- und Vergleichsstrahl. Damit wird das resultierende Meßsignal während des Kalibriervorganges verfälscht. Hinzu kommt eine Strahlschwächung infolge einer unterschiedlichen Zahl von optischen Grenzflächen gegenüber dem Meßbetrieb.

In der DE-PS 28 26 522 ist eine Kalibriereinrichtung beschrieben, bei der eine einzige Kalibrierküvette in den Strahlengang des Meßgasweges geschwenkt wird, während der Vergleichsstrahl unverändert bleibt. Hierbei wird weder das Problem der optischen und der thermischen Symmetrie und Kopplung, noch die Vermeidung von Strahlungsverlusten durch Spalte im Stahlengang berücksichtigt; Spalte im Strahlengang vermindern wegen der Strahlungsverluste die Empfindlichkeit der Meßanordnung. Durch Eindringen von Luft mit CO₂-Anteilen wird die CO₂-Messung durch Vorabsorption gestört. Dies gilt auch für weitere in der Luft befindliche Störgase.

Aus der US-PS 2 970 513 ist ein optischer Mehrstrahl-Analysator bekannt, der aus drei Baueinheiten besteht. Zur Aufrechterhaltung gleicher Temperaturverhältnisse innerhalb des Analysators sind die Baueinheiten thermisch eng miteinander gekoppelt. Eine Kalibriereinrichtung der vorliegenden Art ist nicht vorgesehen.

In der DE-PS 16 98 218 ist ein Infrarot-Gasanalysator beschrieben, bei dem zur Erzielung eines stabilen Nullpunktes die Empfängerkammern zusammen mit dem als Membrankondensator ausgebildeten pneumatischen Differenzdruckmesser in einem gemeinsamen Metallblock untergebracht sind.

Ausgehend von dem aus der DE-OS 35 22 949 bekannten Stand der Technik besteht die Aufgabe der Erfindung darin, die bekannte Kalibriermethode so zu verbessern, daß ein thermische Beeinflussung von Meß- und Vergleichsstrahlengang während des Kalibriervorganges weitgehend vermieden wird.

Die Aufgabe ist mit den im Kennzeichen des Anspruches 1 angegebenen Merkmalen gelöst. Eine Ausgestaltung der Erfindung ist im Unteranspruch gekennzeichnet.

Die Erfindung wird im folgenden mit ihren Einzelheiten und Vorteilen anhand eines in der Zeichnung dargestellten Ausführungsbeispieles näher erläutert.

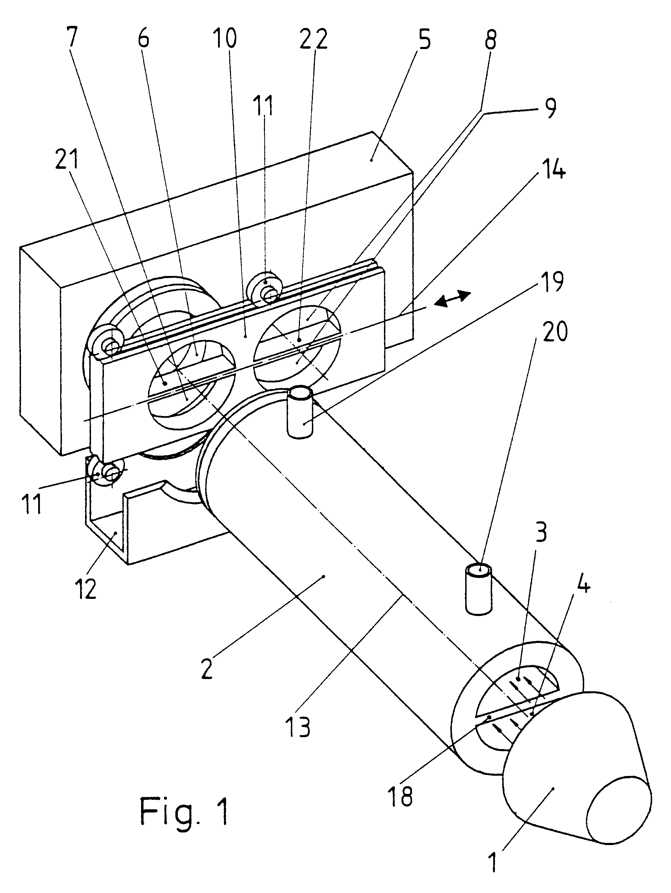

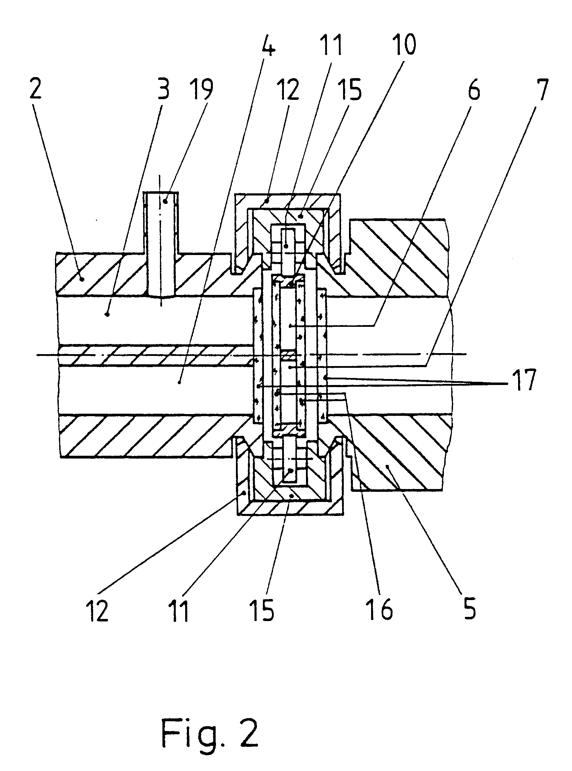

Figur 1 zeigt eine Draufsicht und Figur 2 zeigt einen Querschnitt durch eine Kalibriereinrichtung für ein NDIR-Fotometer mit einem Doppelküvettenrohr.

Das NDIR-Fotometer besteht aus einem Strahler 1 zur Erzeugung der Infrarot-Strahlen, einem Doppelküvettenrohr 2 mit symmetrisch ausgebildeter Meß- und Vergleichsgasküvette 3 und 4 als Absorptionsstrecke und aus einem Empfänger 5 für die Infrarot-Strahlen. Die Meßgasküvette 3 ist von der Vergleichsgasküvette 4 durch einen Steg 18 getrennt.

Im Gegensatz zu den bekannten Kalibriereinrichtungen mit einer einzigen gasgefüllten Küvette besteht die hier beschriebene Einrichtung aus einem System von vier gleichartigen Einzelküvetten 6,7,8 und 9 in paarweiser Anordnung auf einem gemeinsamen Träger 10. Diese Einzelküvetten sind in ihrem Querschnitt jeweils geometrisch ähnlich dem Strahlenquerschnitt von Meßgasküvette 3 und Vergleichsgasküvette 4 und paarweise beidseitig mit für Infrarotstrahlen durchlässigen Fenstern 16 verschlossen.

Eine dieser paarweisen Küvettenanordnungen befindet sich im Meßbetrieb im optischen Strahlengang und ist mit einem die Strahlung nicht beeinflussenden inerten Gas, z. B. Stickstoff, gefüllt, wobei die beiden Einzelküvetten gasmäßig untereinander verbunden sein können.

Die zweite paarweise Küvettenordnung ist genau gleichartig aufgebaut wie die erste Küvettenanordnung und wird im Kalibrierbetrieb anstelle des ersten Küvettenpaares in den Strahlengang gebracht. Die Vergleichsgasseite dieser eigentlichen Kalibrier-Doppel-Küvette ist mit Inertgas gefüllt, während die Meßgasseite mit dem gewünschten Kalibriergas gefüllt ist. Während des Kalibriervorganges wird die Meßgasküvette 3 über die Stutzen 19 und 20 mit Inertgas beströmt.

Es ist ersichtlich, daß bei dieser Anordnung sämtliche Strahlbeeinflussungen, die nicht von den Gasfüllungen verursacht werden, sowohl im Meßbetrieb als auch im Kalibrierbetrieb stets gleichartig auf den Meß- und den Vergleichsstrahl wirken und sich damit in ihrer Signalbeeinflussung kompensieren.

Um die thermischen Einflußfaktoren noch weiter auszuschließen, befinden sich beide Küvettenpaare 6,7 und 8,9 in einem gemeinsamen Träger 10 aus gut wärmeleitfähigen Material, wobei jeweils die Meß- bzw. die Vergleichsseite eines Paares nur durch einen dünnen Trennsteg 21 bzw. 22 voneinander getrennt sind, so daß sich insbesondere innerhalb jeder Paarseite nur geringe Temperaturgradienten ausbilden können. Die thermische Kopplung wird dadurch unterstützt, daß die zum Halten und Führen des Trägers 10 eingesetzten Bauteile, die beiden Klammern 12 und die Halterung 15, gleichzeitig einen thermischen Ausgleich um den Träger 10 herum erzeugen. Durch die enge geometrische Kopplung zwischen dem Doppelküvettenrohr 2 und dem Empfänger 5 mit Hilfe der beiden Klammern 12 werden die Spalte im Strahlengang, die zu Strahlenverlusten und damit zu Empfindlichkeitsminderungen führen, kleingehalten.

Das Verschieben des Trägers 10 der Kalibriereinrichtung erfolgt in einer linearen Bewegung mittels der Führungsrollen 11 in Richtung derjenigen senkrecht zur Symmetrieachse 13 der Infrarot-Strahlen liegenden Achse 14, die die Trennung zwischen dem Meßstrahlengang und dem Vergleichsstrahlengang bildet und die eine Symmetrieachse darstellt. In dem in Figur 1 dargestellten Ausführungsbeispiel liegt diese Achse 14 an der Schnittstelle zwischen dem Doppelküvettenrohr 2 und dem Empfänger 5. Damit wird eine gleichzeitige Veränderung von Meß- und Vergleichsstrahl in der Übergangsphase erreicht, so daß abrupte Signalveränderungen vermieden werden.

Die Aperturen der Kammern 6,7,8 und 9 sind etwas größer als die Aperturen der Meß- und Vergleichsgasküvetten 3 und 4. Damit werden Positionierfehler, die sich durch mechanische Abweichungen in den Endstellungen einstellen könnten und zu einer Strahleinschnürung führen würden, vermieden.

Es ergibt sich somit ein vollkommen symmetrischer Aufbau, der stets Meß- und Vergleichsseite des Fotometers gleichartig und damit ohne Meßsignalverfälschung beeinflußt und der die Auswirkung von Positionierfehlern vermeidet, der thermisch weitgehend gradientenfrei ist und der die Empfindlichkeit des Fotometers nicht negativ beeinflußt. Temperatur- und Meßgasdruckeinflüsse werden in bekannter Weise mit Temperatur- und Druckkompensation, vorzugsweise in der elektrischen Meßsignalverarbeitung, eliminiert.

Die Kalibriereinrichtung mit einer gasgefüllten verschiebbaren Küvettenanordnung ermöglicht auf Grund ihres symmetrischen Aufbaues eine rasche und exakte Kalibrierung, ohne das optische und thermische Gleichgewicht des Fotometers mit meßtechnisch unerwünschten Folgen zu stören. Durch den symmetrischen Aufbau, die geringe Baugröße und die gute thermische Kopplung im Bereich der Kalibrierschnittstelle erfahren die Meß- und Vergleichsseite des Fotometers verbleibende optische und thermische Änderungen gleichmäßig und gleichzeitig.

Sämtliche Änderungen wirken sich auf Meß- und Vergleichsstrahlengang gleichmäßig aus, so daß das Meßsignal nicht in unerwünschter Weise beeinflußt wird. Der kompakte Einbau in den Strahlengang vermeidet Strahlungs- und damit Empfindlichkeitsverluste.

Positionierfehler des Küvettenträgers in den Endlagen wirken sich praktisch nicht aus. Damit wird die Nachkalibrierung von NDIR-Fotometern mit relativ großer optischer und thermischer Empfindlichkeit auch für hohe meßtechnische Anforderungen mit einer der Kalibrierung mittels strömenden Prüfgasen vergleichbaren Qualität möglich.

## Patentansprüche

1. Kalibriereinrichtung für ein nichtdispersives Infrarot-Fotometer mit
- einem Infrarot-Strahler und einer Modulationseinrichtung für die Infrarotstrahlen,
- einem Doppelküvettenrohr mit symmetrisch ausgebildetem Meß- und Vergleichsstrahlengang als Absorbtionsstrecke und
- einem Empfänger sowie Filtereinrichtungen für die Infrarotstrahlen,
bei der
- zum Kalibrieren des Fotometers in paarweise angeordneten gleich ausgeführten Kammern fest eingeschlossene Gase vorgesehen sind, die in vorgegebenen Zeitabständen in dem Meß- und in dem Vergleichsstrahlengang verschoben werden,
- im Meßbetrieb im optischen Strahlengang von Meß- und Vergleichsstrahl sich ein mit Inertgas gefülltes Kammerpaar befindet, während im Kalibrierbetrieb sich ein Kammerpaar im Meß- und Vergleichsstrahlengang befindet, bei dem die Meßstrahlenseite mit dem Kalibriergas und die Vergleichsstrahlenseite mit einem Inertgas gefüllt sind und
- die Kammerpaare auf einem schienenförmigen Träger verschiebbar angeordnet sind und mit für die Infrarotstrahlen durchlässigen Fenstern so verschlossen sind, daß die Anzahl der optischen Grenzflächen für die Infrarotstrahlen im Meßbetrieb und im Kalibrierbetrieb gleich sind,
dadurch gekennzeichnet, daß
zur Erzielung eines temperaturgefällefreien Überganges zwischen Doppelküvettenrohr (2), Träger (10) und Empfänger (5)
- der Träger (10) der Kammern (6,7,8,9) aus gut wärmeleitendem Werkstoff besteht,
- der Träger (10) in einer Halterung (15) geführt ist, die einen mechanischen Kraftschluß und gleichzeitig eine thermische Kopplung zwischen dem Doppelküvettenrohr (2) und dem Empfänger (5) bildet und
- die Kalibriereinrichtung entlang derjenigen Achse (14) in dem Strahlengang verschoben wird, welche die Symmetrieachse (13) zwischen der Meß- (3) und der Vergleichsgasküvette (4) bildet und welche senkrecht zum optischen Strahlengang der Infrarotstrahlen steht.

2. Kalibriereinrichtung nach Anspruch 1, dadurch gekennzeichnet, daß die Aperturen der Kammern (6,7,8,9) größer sind als die entsprechenden Aperturen von Meß- (3) und Vergleichsgasküvette (4) in der Absorptionsstrecke der Infrarotstrahlen.

## Claims

1. Calibrating device for a non-dispersive infrared photometer with
- an infrared emitter and a modulating device for the infrared beams,
- a double cell tube with symmetrically arranged test and reference beam paths as absorption section and
- a receiver and filtering devices for the infrared beams, in which
- for calibration of the photometer permanently enclosed gases are provided in identical chambers arranged in pairs which are moved in the test and in the comparison beam paths at pre-determined intervals of time,
- during measurement a pair of chambers filled with inert gas is located in the optical beam path of the test and comparison beams while during calibration a pair of chambers is located in the test and comparison beam paths in which the test beam side is filled with the calibrating gas and the comparison beam side with an inert gas and
- the pairs of chambers are disposed movably on a rail-shaped holder and closed with windows transparent to infrared beams so that the number of optical boundary surfaces for the infrared beams is the same when measuring and when calibrating,
characterised in that in order to obtain a junction between the double cell tube (2), holder (10) and receiver (5) free of temperature gradients
- the holder (10) of the chambers (6, 7, 8, 9) is made of material with good thermal conductivity,
- the holder (10) is guided in a mounting (15) which forms a mechanical force lock and at the same time a thermal coupling between the double cell tube (2) and the receiver (5) and
- the calibrating device is moved in the beam path along the axis (14) which forms the symmetry axis (13) between the test gas cell (3) and the comparison gas cell (4) and which stands at right angles to the optical beam path of the infrared beams.

2. Calibrating device according to claim 1, characterised in that the apertures of the chambers (6, 7, 8, 9) are greater than the corresponding apertures of the test gas cell (3) and the comparison gas cell (4) in the absorption section of the infrared beams.

## Revendications

1. Dispositif d'étalonnage pour un photomètre à infrarouge non dispersif comportant
- un émetteur infrarouge et un dispositif de modulation pour les rayons infrarouges,
- un tube à double cuvette présentant une marche des rayons de mesure et de comparaison réalisée de façon symétrique comme trajet d'absorption, et
- un récepteur, ainsi que des dispositifs à filtres, pour les rayons infrarouges, dans lequel
- pour l'étalonnage du photomètre, on prévoit des gaz enfermés de façon étanche dans des chambres réalisées de façon identique et agencées par paires, qui sont déplacées à des durées prédéfinies dans la marche des rayons de mesure et dans la marche des rayons de comparaison,
- lors de la mesure, une paire de chambres remplies de gaz inerte se trouve dans la marche du rayon de mesure et du rayon de comparaison, tandis que lors de l'étalonnage, une paire de chambres se trouve dans la marche des rayons de mesure et de comparaison, dans laquelle le côté des rayons de mesure est rempli du gaz d'étalonnage et le côté des rayons de comparaison est rempli d'un gaz inerte, et
- les paires de chambres sont montées de façon coulissante sur un support sous forme de rails et sont fermées par des fenêtres laissant passer les rayons infrarouges de sorte que le nombre de surfaces optiques de séparation pour les rayons infrarouges est identique lors de la mesure et lors de l'étalonnage,
caractérisé en ce que pour obtenir un passage sans gradient de température entre le tube à double cuvette (2), le support (10) et le récepteur (5),
- le support (10) des chambres (6,7,8,9) est réalisé en un matériau qui est un bon conducteur thermique,
- le support (10) est guidé dans un élément de maintien (15) qui forme une adhérence mécanique et simultanément un couplage thermique entre le tube à double cuvette (2) et le récepteur (5) et
- le dispositif d'étalonnage est déplacé dans la marche des rayons le long de l'axe (14) qui forme l'axe de symétrie (13) entre la cuvette à gaz de mesure (3) et la cuvette à gaz de comparaison (4) et qui est dirigé perpendiculairement à la marche optique des rayons infrarouges.

2. Dispositif d'étalonnage selon la revendication 1, caractérisé en ce que les ouvertures des chambres (6,7,8,9) sont plus grandes que les ouvertures correspondantes de la cuvette à gaz de mesure (3) et la cuvette à gaz de comparaison (4) dans le trajet d'absorption des rayons infrarouges.
